(19) Europäisches Patentamt / European Patent Office / Office européen des brevets

(11) **EP 3 915 395 B1**

(12) **EUROPEAN PATENT SPECIFICATION**

(45) Date of publication and mention
of the grant of the patent:
**10.05.2023 Bulletin 2023/19**

(21) Application number: **20850912.5**

(22) Date of filing: **19.03.2020**

(51) International Patent Classification (IPC):
**A23L 5/00** *(2016.01)*        **A23L 33/22** *(2016.01)*

(52) Cooperative Patent Classification (CPC):
**A23L 29/035; A23L 2/39; A23L 2/52; A23L 7/117;
A23L 7/126; A23L 27/10; A23L 27/84; A23L 33/22**

(86) International application number:
**PCT/JP2020/012218**

(87) International publication number:
**WO 2021/024543 (11.02.2021 Gazette 2021/06)**

(54) **POWDERY FOOD CONTAINING EDIBLE PLANT, AND FOOD/DRINK CONTAINING SAME**

PULVERFÖRMIGES NAHRUNGSMITTEL ENTHALTEND ESSBARE PFLANZEN UND DARAUS
HERGESTELLTES NAHRUNGSMITTEL ODER GETRÄNK

ALIMENT EN POUDRE CONTENANT UNE PLANTE COMESTIBLE, ET PRODUIT ALIMENTAIRE
OU BOISSON LE CONTENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2019   JP 2019143723**

(43) Date of publication of application:
**01.12.2021 Bulletin 2021/48**

(73) Proprietor: **Mizkan Holdings Co., Ltd.
Handa-shi, Aichi 475-8585 (JP)**

(72) Inventors:
• **KONISHI, Manabu**
  **Handa-shi, Aichi 475-8585 (JP)**
• **IHARA, Junichiro**
  **Handa-shi, Aichi 475-8585 (JP)**

(74) Representative: **Mewburn Ellis LLP
Aurora Building
Counterslip
Bristol BS1 6BX (GB)**

(56) References cited:
WO-A1-2019/069490        WO-A1-2019/138596
CN-A- 107 259 324        CN-A- 108 902 823
JP-A- 2008 193 968        JP-A- 2014 103 914
JP-A- 2018 153 113        US-A1- 2015 104 398

• unknown: "2-pentyl-furan", Dr. Duke's
Phytochemical and Ethnobotanical Databases ,
1 October 2020 (2020-10-01), XP002806463,
Retrieved from the Internet:
URL:https://phytochem.nal.usda.gov/phytoch
em/chemicals/show/1381 [retrieved on
2022-05-11]
• Yoshiyuki Kawase, Yoshio Ohta, Harumi
Niizuma, Kosaku Yasuda: "Identification of
Flavor Compounds in Fat and Oil. I.", Yukagaku
- Oil Chemistry, vol. 18, no. 10, 18 October 1969
(1969-10-18), pages 738-741, XP009529764, JP
ISSN: 0513-398X

**Description**

Technical Field

The present invention relates to a powdery food containing an edible plant, and use of the powdery food in a food/drink.

Background Art

Inedible parts of edible plants, e.g. core of corn, root apex, skin and petiole of beet, and seedpod of pea or green soybean, are rich in health-functional components such as dietary fibers but have usually been disposed of without being served to eating as edible parts.

Examples of the factor include obstructions to eating because of the presence of strong astringent taste or fiber odor derived from abundantly contained dietary fibers, particularly, insoluble dietary fibers, or because of exceedingly high hardness because of the abundantly contained dietary fibers, particularly, insoluble dietary fibers.

Thus, easy-to-eat powdery foods or drinks having reduced astringent taste or fiber odor have been demanded for the effective utilization of the inedible part of edible plants.

The astringent taste (or called astringency) refers to a taste that offers a tight or constrictive feel in the mouth when a composition is put into the mouth. Although its generation mechanism is not clear, the astringent taste, unlike a taste perceived by stimulating gustatory neurons, is considered as sensation close to tactile sense ascribable to the contraction of cells in the mouth. For example, red wine is characterized by rough taste attributable to tannin derived from grape. The astringent taste is similar to such rough taste, bitterness, or harsh taste but is different sensation.

The fiber odor refers to an odor that offers a used paper-like aged feel and is perceived as unpleasant offensive odor upon eating of a food composition. Although its generation mechanism is not clear, it is presumed that lignin contained in insoluble dietary fibers is decomposed by the influence of light, heat, moisture, or the like and released as a volatile organic compound.

As for techniques for reducing astringent taste in foods, Patent Literature 1 states that the astringent taste of chlorogenic acids can be suppressed with the bitterness of L-tryptophan suppressed by containing (A) 0.001 mass% or more of chlorogenic acids and (B) L-tryptophan and adjusting the mass ratio of the component (B) to the component (A) [(B)/(A)] to 0.00005 to 0.03 in a food composition. Patent Literature 2 states that polyphenol having rough taste or astringent taste can be used in combination with sucralose, thereby suppressing these tastes. Patent Literature 3 states that unpleasant taste or odor such as the unique green-beany flavor or astringent taste of vegetables and/or pulses can be removed by adding a lactic acid bacterium to processed foods of vegetables and/or pulses and retaining the food to reduce the amount of lactic acid produced to 0 to 0.3%.

However, in Patent Literatures 1 and 2, the astringent taste derives from not insoluble dietary fibers and a special component needed to be contained in order to suppress the astringent taste. Patent Literature 3, though a special component is not needed to be added, required a special step of fermentation with a lactic acid bacterium and the technology taught in Patent Literature 3 was inferior in versatility to general foods/drinks.

As for techniques for reducing fiber odor in foods, no study example was found on technology development to contribute to its solution.

US 2015/0104398 A1 is the basis for the preamble of present claims 1 and 7 and concerns a taste-masking composition comprising a taste-masking effective amount of an Angelica root extract. CN 107259324 A concerns a quick-frozen nutrition and healthcare taro noodle.

Citation List

Patent Literatures

Patent Literature 1: JP-A-2018-191634
Patent Literature 2: JP-A-2008-99677
Patent Literature 3: JP-A-2005-21137

Summary of Invention

Technical Problem

From this background, the present invention aims to provide a means for suppressing the astringent taste and fiber odor derived from insoluble dietary fibers in a food/drink containing an edible plant.

Solution to Problem

In view of the above circumstances, the present inventors newly found that the astringent taste and fiber odor derived from insoluble dietary fibers can be suppressed simultaneously by containing more than a certain amount of insoluble dietary fibers as well as a specific amount of a specific compound, which was not found in the conventional techniques, and also setting the specific surface area per unit volume of a powdery food comprising an edible plant to more than a certain value. The present inventors further found that in addition to suppressing the astringent taste and fiber odor derived from insoluble dietary fibers, the sweet flavor derived from an edible plant can be enhanced by containing a specific amount of a specific compound. The present inventors further pursued energetic studies on the basis of the above findings, and completed the following invention.

The present invention provides the following [1] to [9] .

[1] A powdery food comprising an edible plant and satisfying following characteristics (1) to (4):

(1) the powdery food has an insoluble dietary fiber content of 1.0 mass% or more on a dry mass basis;
(2) the powdery food has a specific surface area per unit volume after ultrasonication of the powdery food at a frequency of 40 kHz at an output of 40 W for 3 minutes of 0.02 $m^2$/mL or more;
(3) the powdery food has a 2-pentylfuran content of 1 ppb or more and 50,000 ppb or less; and
(4) the powdery food has an edible plant content of 10 mass% or more with respect to the whole of the powdery food,

characterised in that the powdery food further satisfies the following characteristic (5):
(5) the powdery food has a gamma-nonanolactone content of 0.1 ppb or more and 40,000 ppb or less.
[2] The powdery food according to [1], wherein the powdery food has a content of insoluble dietary fibers derived from the edible plant of 50 mass% or more with respect to the insoluble dietary fiber content of the whole of the powdery food.
[3] The powdery food according to [1] or [2], wherein the edible plant is one or more selected from the group consisting of grains, potatoes, pulses, nuts, vegetables, fruits, and mushrooms.
[4] The powdery food according to any one of [1] to [3], wherein the edible plant is one or more selected from the group consisting of paprika, beet, soybean, corn, carrot, pumpkin, pea, broad bean, sweet potato, broccoli, spinach, tomato, and kale.
[5] Use of the powdery food according to any one of [1] to [4] in a food/drink.
[6] A method for manufacturing the powdery food according to any one of [1] to [4], the method comprising crushing an edible plant having a moisture content of 20 mass% or less, and adding 2-pentylfuran and gamma-nonanolactone.
[7] A method for manufacturing a food/drink containing fine particles derived from an edible plant, the method comprising crushing an edible plant having an insoluble dietary fiber content of 1.0 mass% or more on a dry mass basis and adding 1 ppb or more and 50,000 ppb or less of 2-pentylfuran,

wherein a specific surface area per unit volume of the fine particles after ultrasonication of the powdery food at a frequency of 40 kHz at an output of 40 W for 3 minutes is 0.02 $m^2$/mL or more,
characterised in that the method further comprises adding 1 ppb or more and 40,000 ppb or less of gamma-nonanolactone.

[8] A method for suppressing astringent taste of a food/drink containing fine particles derived from an edible plant, the method comprising crushing an edible plant having an insoluble dietary fiber content of 1.0 mass% or more on a dry mass basis and adding 1 ppb or more and 50,000 ppb or less of 2-pentylfuran,

wherein a specific surface area per unit volume of the fine particles after ultrasonication of the powdery food at a frequency of 40 kHz at an output of 40 W for 3 minutes is 0.02 $m^2$/mL or more,
characterised in that the method further comprises adding 1 ppb or more and 40,000 ppb or less of gamma-nonanolactone.

[9] The method according to [7] or [8], wherein the food/drink is of a liquid, semi-solid or solid form.

Advantageous Effects of Invention

The present invention facilitates to suppress the astringent taste and fiber odor derived from insoluble dietary fibers and more preferably to enhance the sweet flavor derived from an edible plant in a food/drink containing an edible plant.

Description of Embodiments

Hereinafter, examples of the embodiments of the present invention will be described, but the present invention is not limited to these aspects, and can be implemented with any modifications without departing from the gist thereof.

[Powdery food]

The powdery food of the present invention contains an edible plant.
In this context, the term "powdery" in the present invention refers to a state where particles including primary particles, and/or aggregates of primary particles (secondary particles) gather. The average particle size ($D_{50}$) of a powdery food is not particularly limited and is usually 0.3 to 1,800 $\mu$m, preferably 0.5 to 1,500 $\mu$m, and further preferably 1.0 to 1,000 $\mu$m. The average particle size ($D_{50}$) means a particle size ($D_{50}$) corresponding to 50% of a cumulative curve of the particle size distribution of samples prepared on a volume basis and is measured using a laser diffraction particle size distribution analyzer.
The "edible plant" in the present invention refers to a plant that contains insoluble dietary fibers and is eaten or drunk by human.
The edible plant in the present invention may be any plant that is eaten or drunk by human and is not limited in any way, and examples thereof include grains, potatoes, pulses, nuts, vegetables, fruits, mushrooms, and algae. These edible plants may be used alone or in an arbitrary combination of two or more thereof. The edible plants may be directly used or may be used after various treatments (e.g., drying, heating, harshness removal, peeling, seed removal, ripening, salting, and pericarp processing). Among these plants, one or more selected from the group consisting of grains, potatoes, pulses, nuts, vegetables, fruits, and mushrooms are more preferable, because the plants themselves contain sweet components. Furthermore, one or more selected from the group consisting of paprika, beet, soybean (particularly, green soybean, which is soybean harvested with a seedpod in an immature state and is an immature seed of soybean characterized by exhibiting green bean appearance), corn, carrot, pumpkin, pea (particularly, green pea, which is a seed harvested with a seedpod in an immature state and is an immature seed of soybean characterized by exhibiting green bean appearance), broad bean, sweet potato, broccoli, spinach, tomato, and kale are preferable. Based on the state of the whole plant (soybean, pea, etc.) including the inedible part (seedpods, etc.), it can be determined whether or not some foodstuffs whose edible part (green soybean, green pea, etc.) is treated as a vegetable are pulses. The classification of an edible plant can be determined based on the state of the whole plant including the inedible part. Specifically, it is possible to understand which food corresponds to the edible plant in the present invention by, for example, referring to grains, potatoes, pulses, nuts, vegetables, fruits, mushrooms, and algae in the classification described in "the Standard Tables of Food Composition in Japan, 2015, (Seventh Revised Version) Supplement, 2018" (see the Food composition tables provided by the Ministry of Health, Labor and Welfare, in particular, Table 1 on page 236).
The edible plant preferably contains an edible part thereof and an inedible part thereof together.
The site and the proportion of the inedible part can be naturally understood by those skilled in the art who handle the food or processed food products. For example, the "removed portion" and the "refuse" described in "the Standard Tables of Food Composition in Japan, 2015, (Seventh Revised Version)" can be referred to and considered as the site and the proportion of the inedible part, respectively. The site and the proportion of the edible part can also be understood from the site and the proportion of the inedible part in an edible plant.
The edible plant may be used in an arbitrary combination of the edible part and/or the inedible part thereof. In view of suppressing the astringent taste and fiber odor derived from insoluble dietary fibers, the proportion of the inedible part with respect to the total amount of the edible part and the inedible part of the edible plant [inedible part / (edible part + inedible part)] is preferably 1 mass% or more, more preferably 2 mass% or more, further preferably 3 mass% or more, further preferably 5 mass% or more, and still further preferably 8 mass% or more and is preferably 80 mass% or less, more preferably 70 mass% or less, and further preferably 60 mass% or less.
The edible plant used in the present invention preferably contains or more has an insoluble dietary fiber content of 1.0 mass% or more on a dry mass basis in a dry state.
In this context, the "dry state" in the present invention refers to a state having a moisture content of 20 mass% or less.

The term "on a dry mass basis" in the present invention refers to an equivalent value to the mass when the water content is 0 mass%.

The moisture content is measured as a water content ratio based on the dry mass is measured by subjecting a sample to heat drying under reduced pressure. Specifically, an appropriate amount of a sample is placed in a scale container previously adjusted to a constant weight (W0) and is weighed (W1). Under ordinary pressure, the scale container with the lid removed or the aperture open is put in an electric dryer that enables a constant temperature and reduced pressure, the electric dryer being adjusted to a predetermined temperature (more specifically, 90°C). The door is closed, the vacuum pump is operated, and drying is performed at a predetermined degree of reduced pressure for a predetermined period of time. The vacuum pump is stopped, the pressure is restored to ordinary pressure by sending dry air, the scale container is taken out, the lid is put on the container, and after allowing to cool in a desiccator, the amount is weighed (W2). This procedure is repeated on a sample basis. The moisture content (mass%) is determined by the following calculation equation.

$$\text{Moisture content (mass\%)} = (W1 - W2)/(W2 - W0) \times 100$$

W0: mass (g) of the scale container adjusted to constant weight,
W1: mass (g) of the scale container containing a sample before drying, and
W2: mass (g) of the scale container containing the sample after drying.

The "water activity value" in the present invention is a numerical value representing the proportion of free water in a food and is used as an indicator of the preservability of a food. Specifically, it is the value obtained by dividing the equilibrium vapor pressure (p) in the headspace above a sample by the vapor pressure (p0) of water at the same temperature, and in other words, is the value obtained by dividing the equilibrium relative humidity (ERH) in the headspace by 100. The water activity value is measured with a general water activity measuring device (e.g., "LabMaster-aw NEO" manufactured by Novasina AG, employing an electric resistance based (electrolyte based) humidity sensor).

The powdery food of the present invention contains more than a certain amount of insoluble dietary fibers. Specifically, the insoluble dietary fiber content in the powdery food of the present invention may be 1.0 mass% or more on a dry mass basis and is preferably 1.5 mass% or more, further preferably 2 mass% or more, further preferably 4 mass% or more, further preferably 6 mass% or more, further preferably 8 mass% or more, further preferably 10 mass% or more, further preferably 14 mass% or more, further preferably 20 mass% or more, and particularly preferably 30 mass% or more. The upper limit of the insoluble dietary fiber content is preferably 90 mass% or less, more preferably 80 mass% or less, further preferably 70 mass% or less, further preferably 60 mass% or less, and further preferably 50 mass% or less.

In the powdery food of the present invention, the content of insoluble dietary fibers derived from the edible plant is preferably 50 mass% or more, more preferably 70 mass% or more, further preferably 90 mass% or more, and most preferably 100 mass% on a dry mass basis with respect to the insoluble dietary fiber content of the whole of the powdery food of the present invention. As the method for quantitatively measuring insoluble dietary fibers, a general modified Prosky method is used in accordance with "the Standard Tables of Food Composition in Japan, 2015, (Seventh Revised Version)".

In the present invention, the content of the edible plant with respect to the whole of the powdery food is 10 mass% or more on a dry mass basis and is, in view of suppressing the astringent taste and fiber odor derived from insoluble dietary fibers, preferably 30 mass% or more, further preferably 50 mass% or more, further preferably 70 mass% or more, further preferably 90 mass% or more, and particularly preferably 100 mass%.

In the powdery food of the present invention, the content of fine particles (having a specific surface area per unit volume after ultrasonication of 0.02 $m^2$/mL or more; regardless of difference in states, such as dry and wet states) derived from the edible plant with respect to the whole of the powdery food is preferably 10 mass% or more, further preferably 30 mass% or more, further preferably 50 mass% or more, further preferably 70 mass% or more, further preferably 90 mass% or more, and particularly preferably 100 mass% on a dry mass basis. In a powdery food in which the content of the edible plant with respect to the whole of the powdery food is not 100 mass%, the type of other powder is not limited in any way as long as the effects of the present invention are not impaired. Any powdered food material can be appropriately selected according to the desired flavor and quality for the final powdery food without any limitation on the type, the combination thereof, and the use. As such a powdered food material, for example, sodium chloride, sucrose, and dextrin can be mentioned.

The powdery food of the present invention contains more than a certain amount of 2-pentylfuran (CAS. No. 3777-69-3) in view of suppressing the astringent taste and fiber odor derived from insoluble dietary fibers. As specific contents, the lower limit is 1 ppb or more and is, in view of more notably providing the effects of the present invention, preferably 3 ppb or more, further preferably 5 ppb or more, and particularly preferably 10 ppb or more. The upper limit is 50,000 ppb or less and is, in view of the risk of occurrence of off-flavor, preferably 40,000 ppb or less, further preferably 30,000 ppb or less, further preferably 20,000 ppb or less, further preferably 10,000 ppb or less, further preferably 5,000 ppb or less, further preferably 3,000 ppb or less, and particularly preferably 1,000 ppb or less.

The powdery food of the present invention contains more than a certain amount of gamma-nonanolactone (CAS. No. 104-61-0) in view of enhancing the sweet flavor derived from the edible plant. Specifically, the lower limit is 0.1 ppb or more and is, in view of providing the effects of the present invention, preferably 0.3 ppb or more, further preferably 1 ppb or more, particularly preferably 3 ppb or more. The upper limit is 40,000 ppb or less and is, in view of the risk of occurrence of off-flavor, preferably 30,000 ppb or less, further preferably 20,000 ppb or less, further preferably 10,000 ppb or less, further preferably 5,000 ppb or less, further preferably 3,000 ppb or less, and particularly preferably 1,000 ppb or less. Both 2-pentylfuran and gamma-nonanolactone are contained because the effect of suppressing the astringent taste and fiber odor derived from insoluble dietary fibers and the effect of enhancing the sweet flavor derived from the edible plant are synergistically promoted, and both components are contained in the respective predetermined contents.

2-Pentylfuran is a compound that is generated by the autooxidation of fat/oil, and is known to be a causative substance of oxidative rancidity. However, the effect of 2-pentylfuran of suppressing the astringent taste and fiber odor derived from insoluble dietary fibers has not been known at all. Gamma-nonanolactone is known as a coconut-like flavor component. However, the influence of gamma-nonanolactone on other flavors has been unknown, and it has not been known at all that when both gamma-nonanolactone and 2-pentylfuran are contained in regulated amounts, the effect of enhancing the sweet flavor derived from an edible plant is further obtained in addition to the effect of suppressing the astringent taste and fiber odor derived from insoluble dietary fibers.

In the present invention, the 2-pentylfuran or gamma-nonanolactone content is measured according to a usual method by the following GC/MS assay.

For the preparation of a measurement sample, a sample is diluted with distilled water to extract 2-pentylfuran from the sample because 2-pentylfuran has high affinity for water. As the measurement method, a full evaporation-dynamic headspace-gas chromatography-mass spectrometry (hereinafter, "FE-DHS-GC/MS") method is performed, which measures water-soluble components that is not measurable by ordinary analysis by forcibly volatilizing a very small amount of a sample thoroughly by a DHS method (a dynamic extraction method by forcibly purging the volatile components in the gas phase with an inert gas and collecting the volatile components with an adsorbent). Gamma-nonanolactone may also be analyzed by the same procedure. For example, a sample is well homogenized in an appropriate amount (20-fold amount) of distilled water to extract components, the solid content is removed by, for example, filtration, a significantly small amount (0.03 g) of the residue is weighed in a 10-mL flat bottom vial, the vial is then sealed, the whole quantity of the sample is forcibly volatilized by purging with an excess amount of nitrogen gas and is adsorbed with an adsorption resin (Tenax column) according to the properties of the analytical components, the resulting resin is then treated with a heating and desorbing system to introduce to a two-dimensional gas chromatographic analyzer, and analysis is performed. In order to measure the concentration of a component in a sample, the sample and a standard sample diluted to an arbitrary concentration are analyzed to grasp the confirmation ion peak areas of both samples, and the values are compared with each other to measure the concentration of the component in the sample.

After the analysis above, a part of the sample is applied to a mass spectrometer to obtain the mass spectrum, and the retention times of both components are verified based on the related ions of each component (2-pentylfuran: m/z = 81, 82, 138, gamma-nonanolactone: m/z = 55, 85, 99).

The mass spectrometer (MS) used is a quadrupole type 5973 Mass Selective Detector (manufactured by Agilent Technologies, Inc.). Mass spectral analysis can be performed by carrying out an ionization method EI+ at an ionization potential of 70 eV, importing the result by a scan mode, and carrying out identification using ions characteristic to each component (2-pentylfuran: m/z = 81, 82, 138, gamma-nonanolactone: m/z = 55, 85, 99) as related ions, and the retention times of 2-pentylfuran and gamma-nonanolactone are specified by specifying the retention time in which all these related ions in the standard product are detected.

Specifically, FE-DHS-GC/MS analysis is performed under the conditions as below.

[GC/MS condition (Full evaporation dynamic headspace (FE-DHS) injection method)]

- Apparatus: 7890B (GC) and 5977B (MS) manufactured by Agilent Technologies, Inc., and MultiPurpose Sampler (auto-sampler) manufactured by Gerstel GmbH & Co., KG
- Adsorption resin: TENAX
- Incubation temperature: 80°C
- Nitrogen gas purge volume: 3 L

- Nitrogen gas purge flow rate: 100 mL/min
- TDU: [30°C]-[210°C/min]-[240°C (3 min)]
- CIS: [10°C]-[120°C/sec]-[240°C] (liner filler: TENAX)
- Column: DB-WAX (30 m × 250 $\mu$m × 0.25 $\mu$m) manufactured by Gerstel GmbH & Co., KG
- Column temperature: [40°C (3 min)]-[5°C/min]-[240°C (7 min)]
- Carrier gas: He
- Transfer line: 250°C
- Ion source temperature: 230°C
- Scan Parameter: m/z = from 28.7 to 300
- Split: none

Under the conditions above, authentic preparations of 2-pentylfuran and gamma-nonanolactone (manufactured by Tokyo Chemical Industry Co., Ltd.) having known concentrations are diluted with distilled water to appropriate concentrations, and the diluted authentic preparations and a sample are subjected to analysis. The component in the sample is quantitatively measured by comparison with the retention time of the standard product through analysis based on a mass spectral pattern by a mass spectrometer, although there is some deviation depending on the measurement conditions, and by comparison of the amounts of confirmation ions (2-pentylfuran; m/z 81, gamma-nonanolactone; m/z 85) between the diluted authentic preparations and the sample in or around the retention time of the peak that seems to be the target component (for example, around a retention time of 10 to 16 minutes for 2-pentylfuran, and around a retention time of 33 to 39 minutes for gamma-nonanolactone).

It is particularly preferable to half-cut the area near the retention time of a peak that seems to be the target component and implement two-dimensional gas chromatography with columns of different properties, because the component concentration can be more exactly quantitatively measured.

Specifically, the two-dimensional gas chromatography is performed under the following conditions.

[Two-dimensional GC/MS conditions]

- CTS: [-150°C]-[20°C/sec]-[250°C]
- Column: DB-5 (10 m × 180 $\mu$m × 0.4 $\mu$m) manufactured by Gerstel GmbH & Co., KG
- Column temperature: [40°C (0 min)]-[40°C/min]-[240°C (15 min)]
- Carrier gas: He

2-Pentylfuran in the present invention may be derived from a raw material or may be newly added. The one to be newly added may be a composition or a reagent containing 2-pentylfuran. When the powdery food of the present invention containing the composition is served for eating or drinking, 2-pentylfuran is preferably derived from the food or drink and is preferably derived from an edible plant. The same is applied to gamma-nonanolactone.

In the powdery food of the present invention, the specific surface area per unit volume after ultrasonication is a predetermined value or more in view of suppressing the astringent taste and fiber odor derived from the edible plant. Specifically, the lower limit of the specific surface area per unit volume after ultrasonication is 0.02 $m^2$/mL or more and is, in particular, preferably 0.04 $m^2$/mL or more, further preferably 0.06 $m^2$/mL or more, further preferably 0.10 $m^2$/mL or more, further preferably 0.20 $m^2$/mL or more, further preferably 0.35 $m^2$/mL or more, further preferably 0.50 $m^2$/mL or more, further preferably 0.70 $m^2$/mL or more, and particularly preferably 1.00 $m^2$/mL or more. The upper limit is not particularly limited and is 5.00 $m^2$/mL or less for industrial convenience and is, in particular, 4.00 $m^2$/mL or less, and further preferably 3.00 $m^2$/mL or less. In the present invention, the "ultrasonication" is treatment of applying ultrasonic waves having a frequency of 40 kHz to a measurement sample at an output of 40 W for 3 minutes, unless otherwise specified.

In the present invention, the specific surface area per unit volume after ultrasonication is measured under the following conditions after disturbing a dispersion of the powdery food. First, ethanol, which hardly affects the structure of a sample at the time of measurement of the powdery food, is used as a solvent at the time of measurement. For measurement, a dispersion of a sample diluted and suspended in the solvent in advance is used, and the measurement is performed in a state where the sample is homogeneously suspended in the solvent. If it is difficult to suspend the sample homogeneously in the solvent, 1 g of the sample is dipped in 50 g of ethanol, left standing for approximately 5 minutes, and then well stirred with a spatula for suspension, and a solution (2 mass% ethanol dispersion) that has passed through a sieve with a new JIS 7.5 mesh having an opening of 2.36 mm and wire dia. of 1.0 mm is used in the measurement. The laser diffraction particle size distribution analyzer used for the measurement is a laser diffraction particle size distribution analyzer having a measurement range of at least from 0.02 to 2,000 $\mu$m by a laser diffraction scattering method. For example, Microtrac MT3300 EX2 system of MicrotracBEL Corporation is used, and as the measurement application software, for example, DMSII (Data Management System version 2, MicrotracBEL Corporation) is used. When the measurement apparatus and the software above are used, measurement is performed by pressing down the washing button of the software to implement washing, pressing down the set zero button of the software to implement zero adjustment, and directly charging a sample by sample loading until the concentration of the sample falls within an appropriate range. The concentration of a sample before disturbance, i.e., a sample without ultrasonication, is adjusted within an appropriate range within two rounds of sample loading after putting the sample, and immediately thereafter, laser diffraction is performed at a flow rate of 60% for a measurement time of 10 seconds, and the result is used as the measured value. When a sample after disturbance, i.e., a sample after ultrasonication is subjected to the measurement, a sample is put and then ultrasonicated using the above-mentioned measurement apparatus, followed by the measurement. In this case, a sample not subjected to ultrasonication is put, the concentration is adjusted within an appropriate range by sample loading, and the ultrasonication button of the software is then pressed down to perform ultrasonication. Subsequently, defoaming is performed three times, and then sample loading is performed again. Immediately after verification that the concentration is still within the appropriate range, laser diffraction is performed at a flow rate of 60% for a measurement time of 10 seconds, and the result can be used as the measured value. The parameters at the time of measurement are, for example, distribution display: volume, particle refractive index: 1.60, solvent refractive index: 1.36, upper limit of measurement ($\mu$m) = 2,000.00 $\mu$m, and lower limit of measurement ($\mu$m) = 0.021 $\mu$m.

In the present invention, the specific surface area per unit volume ($m^2$/mL) refers to a specific surface area per unit volume (1 mL) measured using the laser diffraction particle size distribution analyzer mentioned above, assuming that the particles are spherical. The specific surface area per unit volume when assuming that the particles are spherical is a numerical value based on a measurement mechanism different from that for measured values reflecting the component, surface structure, etc. of the particles (specific surface area per volume or per mass determined by a method such as penetration or gas adsorption). The specific surface area per unit volume when assuming that the particles are spherical is determined according to $6 \times \sum(ai) / \sum(ai \cdot di)$ wherein ai represents a surface area per particle, and di represents a particle size.

[Method for manufacturing powdery food]

The powdery food of the present invention can be manufactured by subjecting a dried edible plant having a predetermined insoluble dietary fiber content or more to crushing such that the specific surface area per unit volume after ultrasonication is a predetermined value or more and allowing the powdery food to contain a predetermined amount of 2-pentylfuran and a predetermined amount of gamma-nonanolactone. Specific embodiments about the edible plant, the insoluble dietary fiber content and specific surface area per unit volume after ultrasonication, and 2-pentylfuran and gamma-nonanolactone are as described above. For incorporating 2-pentylfuran and gamma-nonanolactone, 2-pentylfuran and gamma-nonanolactone may be added to or mixed with a powder of an edible plant before drying, followed by drying and subsequent crushing, or added to or mixed with a dried edible plant after drying and before crushing, followed by crushing, or added to or mixed with a dried edible plant after crushing. The composition containing 2-pentylfuran and gamma-nonanolactone is preferably a foodstuff and is preferably derived from an edible plant.

As the drying method for the edible plant, an arbitrary method that is generally used in drying of foods can be used. Specific examples thereof include sun drying, shade drying, freeze drying, air drying (e.g., hot air drying, fluidized bed drying method, spray drying, drum drying, and low temperature drying), pressure drying, vacuum drying, microwave drying, and oil heat drying. In particular, a method involving air drying (e.g., hot air drying, fluidized bed drying method, spray drying, drum drying, or low temperature drying) or freeze drying is preferable in view of a small degree of change in color tone or flavor inherent in the edible plant and relative ease of controlling the non-food aroma (e.g., burnt odor).

The method of crushing is not particularly limited. The temperature at the time of crushing is not limited either, and any of high-temperature crushing, ordinary-temperature crushing, and low-temperature crushing may be performed. The pressure at the time of crushing is not limited either, and any of high-pressure crushing, ordinary-pressure crushing, and low-pressure crushing may be performed. Examples of the apparatus for such crushing include apparatuses, such as a blender, a mixer, a mill, a kneader, a grinder, a crusher, and an attritor, and any of these apparatuses may be used. As such an apparatus, for example, a medium stirring mill, such as a dry bead mill and a ball mill (a rolling type, a vibration type, etc.), a jet mill, a high-speed rotary impact type mill (e.g., pin mill), a roll mill, or a hammer mill can be used.

The powdery food of the present invention may be prepared by subjecting the above-mentioned various edible plants to drying and crushing, and using the resultant as all or a part of the powdery food.

The method for manufacturing the powdery food of the present invention includes a step of crushing an edible plant having a moisture content of 20 mass% or less, and the moisture content of the edible plant is further preferably 15 mass% or less. Further preferably, an edible plant having a moisture content equal to or less than those described above and having a water activity value of 0.95 or less, further 0.90 or less, further 0.85 or less, further 0.80 or less, and further 0.75 or less is crushed. The moisture content of the powdery food of the present invention is preferably less than 20 mass% and further preferably 15 mass% or less. Further preferably, the moisture content of the edible plant is equal to or less than those described above, and the water activity value is 0.95 or less, further 0.90 or less, further 0.85 or less, further 0.80 or less, and further 0.75 or less.

The present invention also includes a method for more strongly suppressing the astringent taste and fiber odor of a powdery food and further enhancing the sweet flavor derived from an edible plant, the method including adding a predetermined amount of 2-pentylfuran and a predetermined amount of gamma-nonanolactone to a powder derived from an edible plant having a predetermined dietary fiber content or more and a predetermined value or more of a specific surface area per unit volume after ultrasonication (e.g., dried and crushed product of an edible plant). Specific embodiments about the edible plant, the insoluble dietary fiber content and specific surface area per unit volume after ultrasonication, and 2-pentylfuran and gamma-nonanolactone are as described above. As described above, the astringent taste and fiber odor derived from insoluble dietary fibers are further strongly suppressed and the characteristic sweet flavor inherent in an edible plant is further enhanced by incorporating 2-pentylfuran and gamma-nonanolactone in certain ranges of their respective contents to a powdery food having a predetermined dietary fiber content or more and a predetermined value or more of a specific surface area per unit volume after ultrasonication.

[Food/drink]

The food/drink of the present invention contains the powdery food mentioned above.

Specifically, in a food/drink containing a powdery food derived from an edible plant, the astringent taste and fiber odor derived from insoluble dietary fibers can be suppressed, and furthermore, the pleasant flavor of an edible plant having enhanced sweet flavor derived from an edible plant can be imparted to the food/drink, whereby the flavor of the food/drink can be improved. The amount of the powdery food of the present invention contained in the food/drink is not particularly limited and may be appropriately adjusted such that the improved flavor of the edible plant can be imparted to the food/drink. For example, the proportion of the edible plant with respect to the total amount of the food/drink is preferably 10 mass% or more, more preferably 20 mass% or more, more preferably 30 mass% or more, and particularly preferably 40 mass% or more. The upper limit of the proportion of the edible plant is not particularly limited and may be 100 mass%.

The food/drink of the present invention may contain other foodstuffs as long as they do not interfere with the function and effect of the present invention. Specifically, such a foodstuff is a foodstuff or ingredient larger than 2,000 μm (2 mm), which is not the target of laser diffraction particle size distribution measurement. Examples thereof include grain puffs, dried nuts, and dried fruits, and any of them may be used. These foodstuffs may be used alone or in an arbitrary combination of two or more thereof.

In such a case, the specific surface area per unit volume after ultrasonication is measured after removing, from the ingredients, those having a diameter of the measurement upper limit, 2,000 μm or more.

The form of the food/drink of the present invention may be any of liquid, semi-solid, and solid forms. The liquid form may be, for example, an RTD beverage which can be drunk as it is without being diluted or may be a from-concentrate beverage. The semi-solid form is not particularly limited as long as it is a semi-solid having fluidity. For example, a pasty food as well as a jelly-like beverage which is sucked through a mouthpiece attached to a container or through a straw can also be used. The solid form can be, for example, various forms such as powdery, granular, tablet-like, rod-like, platelike, and blockish forms. In particular, a powdery food is preferable in view of more notably providing the effects of the present invention.

Examples of the food/drink of the present invention include, but not limited to, liquid foods such as beverages (e.g., soup and smoothie), liquid, semi-solid, or solid food/drink such as seasonings (e.g., mayonnaise, dressing, butter, and margarine), semi-solid or solid foods such as confectioneries (e.g., granola, sticks, crackers, caramel, gummies, and chips), and powdery foods such as dry seasonings.

The present invention also encompasses a method for manufacturing a food/drink containing fine particles derived from an edible plant having a specific surface area per unit volume after ultrasonication of 0.02 $m^2$/mL or more, the method including crushing an edible plant having an insoluble dietary fiber content of 1 mass% or more on a dry mass basis and allowing the powdery food to contain 1 ppb or more and 50,000 ppb or less of 2-pentylfuran and 1 ppb or more and 40,000 ppb or less of gamma-nonanolactone. The present invention also encompasses a method for manufacturing a food/drink containing fine particles derived from an edible plant having a gamma-nonanolactone content of 0.1 ppb or more and 40,000 ppb or less in addition to 2-pentylfuran. In the above manufacturing methods, 2-pentylfuran and gamma-nonanolactone can be added at an arbitrary timing during the process of manufacturing a food/drink. Details are as described above.

The present invention also encompasses a method for suppressing the astringent taste and fiber odor derived from insoluble dietary fibers of a food/drink containing fine particles derived from an edible plant having a specific surface area per unit volume after ultrasonication of 0.02 $m^2$/mL or more, the method including crushing an edible plant having an insoluble dietary fiber content of 1 mass% or more on a dry mass basis and allowing the powdery food to contain 1 ppb or more and 50,000 ppb or less of 2-pentylfuran and 1 ppb or more and 40,000 ppb or less of gamma-nonanolactone. The present invention further encompasses a method for enhancing the sweet flavor of a food/drink containing fine particles derived from an edible plant having a gamma-nonanolactone content of 0.1 ppb or more and 40,000 ppb or less in addition to 2-pentylfuran. In the above methods, 2-pentylfuran and gamma-nonanolactone can be added to a food/drink at an arbitrary timing. Details are as described above.

Examples

The present invention will now be described in more detail with reference to Examples. Water used was all distilled water unless otherwise specified.
The raw materials used in the present Examples are as follows.

(1) Edible plant

The following edible plants were selected, and powders in a dry state (moisture content: 15 mass% or less) were used.

- Corn containing the edible part and 50 mass% of bract, pistil and cob as the inedible part
- Beet containing the edible part and 10 mass% of root apex, skin and petiole as the inedible part
- Carrot containing the edible part and 3 mass% of root apex and the base of petiole as the inedible part
- Pumpkin containing the edible part and 9 mass% of pumpkin guts, seed and both ends as the inedible part
- Pea containing the edible part and 55 mass% of seedpod as the inedible part
- Paprika containing the edible part and 10 mass% of calyx, core and seed as the inedible part
- Green soybean containing the edible part and 45 mass% of seedpod as the inedible part

(2) 2-Pentylfuran

2-Pentylfuran in pure form (manufactured by Tokyo Chemical Industry Co., Ltd.) was used.

(3) Gamma-nonanolactone

Gamma-nonanolactone in pure form (manufactured by Tokyo Chemical Industry Co., Ltd.) was used.

Comparative Examples 1 to 3 and Test Examples 1 to 42

1 mL of water (control), or a dilution of 2-pentylfuran or gamma-nonanolactone diluted with water to an appropriate concentration was added to a powder of the edible plant so as to attain the 2-pentylfuran content and the gamma-nonanolactone content shown in Table 1, and then mixed therewith to prepare a powdery food containing the edible plant. Then, the specific surface area per unit volume after ultrasonication and the insoluble dietary fiber content were measured as to the obtained powdery food under the above suitable conditions. Then, the astringent taste and fiber odor derived from insoluble dietary fibers of the powdery food and the flavor derived from the edible plant were subjected to sensory inspection according to evaluation criteria described below. The results are shown in Table 1. When effects other than the evaluation criteria were found, a typical effect among them is shown in the remarks column of Table 1. Test Examples 1 to 13, 29, 31, 33, 35, 36, 39 and 41 are not part of the invention.

Comparative Example 4

50 mass% of canola oil was added to and mixed with the powdery food containing corn prepared in Comparative Example 2, and the mixture was micronized using "RMB easynano" (product name) manufactured by Aimex Co., Ltd. to obtain a pasty food. The micronization was performed by using 380 g of zirconia beads of a diameter of 2 mm for 120 mL of the mixture of the powdery food containing corn and canola oil under conditions of a mill rotation speed of 2,000 rpm and a cooling water temperature of 5°C for 30 minutes. The concentration of 2-pentylfuran and/or gamma-nonanolactone in the powdery food containing corn was previously adjusted according to the same method as above. Then, the specific surface area per unit volume after ultrasonication and the insoluble dietary fiber content were measured as to the obtained pasty food in the same manner as above. Then, the astringent taste and fiber odor derived from insoluble dietary fibers of the pasty food and the flavor derived from the edible plant were subjected to sensory inspection in the same manner as above. The results are shown in Table 1. When effects other than the evaluation criteria were found, a typical effect among them is shown in the remarks column of Table 1.

Test Examples 43 and 44

A pasty food was obtained by the same procedure as in Comparative Example 4 except that a powdery food containing corn adjusted so as to attain the 2-pentylfuran content and the gamma-nonanolactone content shown in Table 1 was used in Comparative Example 4. The pentylfuran content and the gamma-nonanolactone content were adjusted by the same method as above. Then, the specific surface area per unit volume after ultrasonication and the insoluble dietary fiber content were measured as to the obtained pasty food in the same manner as above. Then, the astringent taste and fiber odor derived from insoluble dietary fibers of the pasty food and the flavor derived from the edible plant were subjected to sensory inspection in the same manner as above. The results are shown in Table 1. When effects other than the evaluation criteria were found, a typical effect among them is shown in the remarks column of Table 1. Test Example 43 is not part of the invention.

Comparative Example 5

The powdery food containing corn prepared in Comparative Example 2 was mixed at 10 mass% with water, and a 180-mL glass bottle was then filled with 150 mL of this mixture, sterilized in a hot water bath (temperature reached: 60°C), and cooled. Then, the glass bottle was capped to prepare a beverage packed in a container. The concentration of 2-pentylfuran and/or gamma-nonanolactone in the powdery food containing corn was previously adjusted according to the same method as above. Then, the specific surface area per unit volume after ultrasonication and the insoluble dietary fiber content were measured as to the obtained beverage in the same manner as above. Then, the astringent taste and fiber odor derived from insoluble dietary fibers of the beverage and the flavor derived from the edible plant were subjected to sensory inspection in the same manner as above. The results are shown in Table 1. When effects other than the evaluation criteria were found, a typical effect among them is shown in the remarks column of Table 1.

Test Examples 45 to 48

A beverage packed in a container was obtained by the same procedure as in Comparative Example 5 except that a powdery food containing corn adjusted so as to attain the 2-pentylfuran content and the gamma-nonanolactone content shown in Table 1 was used in Comparative Example 5. The pentylfuran content and the gamma-nonanolactone content were adjusted by the same method as above. Then, the specific surface area per unit volume after ultrasonication and the insoluble dietary fiber content were measured as to the obtained beverage in the same manner as above. Then, the astringent taste and fiber odor derived from insoluble dietary fibers of the beverage and the flavor derived from the edible plant were subjected to sensory inspection in the same manner as above. The results are shown in Table 1. When effects other than the evaluation criteria were found, a typical effect among them is shown in the remarks column of Table 1. Test Example 45 is not part of the invention.

Comparative Example 6

Quinua puffs (5 mass%) having a diameter of approximately 3 mm, diced almond (10 mass%), concentrated date juice (Brix 75) (30 mass%), olive oil (10 mass%), and water (20 mass%) were added to the powdery food (40 mass%) containing corn prepared in Comparative Example 2, and the mixture was pressure kneaded using a squeezer (manufactured by Fujiseiki Co., Ltd., Squeezer II), appropriately mixed, then shaped into a thickness of 5 mm, a length of 10 cm, and a width of 3 cm, and dried at 80°C for 5 minutes to prepare a bar-shaped solid food (100 mass% after drying). The concentration of 2-pentylfuran and/or gamma-nonanolactone in the powdery food containing corn was previously adjusted according to the same method as above. Then, the specific surface area per unit volume after ultrasonication and the insoluble dietary fiber content were measured as to the obtained bar-shaped solid food in the same manner as in Comparative Example 1. Then, the astringent taste and fiber odor derived from insoluble dietary fibers of the bar-shaped solid food and the flavor derived from the edible plant were subjected to sensory inspection in the same manner as above. The results are shown in Table 1. When effects other than the evaluation criteria were found, a typical effect among them is shown in the remarks column of Table 1.

Test Examples 49 and 50

A bar-shaped solid food was obtained by the same procedure as in Comparative Example 6 except that a powdery food containing corn adjusted so as to attain the 2-pentylfuran content and the gamma-nonanolactone content shown in Table 1 was used in Comparative Example 6. The pentylfuran content and the gamma-nonanolactone content were adjusted by the same method as above. Then, the specific surface area per unit volume after ultrasonication and the insoluble dietary fiber content were measured as to the obtained bar-shaped solid food in the same manner as above. Then, the astringent taste and fiber odor derived from insoluble dietary fibers of the bar-shaped solid food and the flavor derived from the edible plant were subjected to sensory inspection in the same manner as above. The results are shown in Table 1. When effects other than the evaluation criteria were found, a typical effect among them is shown in the remarks column of Table 1. Test Example 49 is not part of the invention.

The evaluation criteria of the sensory inspection are as follows.

<Evaluation criterion 1: astringent taste derived from insoluble dietary fibers>

5: Astringent taste derived from insoluble dietary fibers is not perceived at all;
4: Almost no astringent taste derived from insoluble dietary fibers is perceived;
3: Astringent taste derived from insoluble dietary fibers is perceived but acceptable;
2: Astringent taste derived from insoluble dietary fibers is somewhat strongly perceived; and
1: Astringent taste derived from insoluble dietary fibers is strongly perceived.

Here, astringent taste derived from insoluble dietary fibers was evaluated in view of the presence or absence of tight or constrictive sensation in the mouth when a sample is put into the mouth.

<Evaluation criterion 2: fiber odor derived from insoluble dietary fibers>

5: Fiber odor derived from insoluble dietary fibers is not perceived at all;
4: Almost no fiber odor derived from insoluble dietary fibers is perceived;
3: Fiber odor derived from insoluble dietary fibers is perceived but acceptable;
2: Fiber odor derived from insoluble dietary fibers is somewhat strongly perceived; and
1: Fiber odor derived from insoluble dietary fibers is strongly perceived.

Here, fiber odor derived from insoluble dietary fibers was evaluated in view of the presence or absence of used paper-like aged offensive odor.

<Evaluation criterion 3: flavor derived from edible plant>

5: Original natural flavor of edible plant is strongly perceived;
4: Original natural flavor of edible plant is somewhat strongly perceived;
3: Original natural flavor of edible plant is perceived; 2: Original natural flavor of edible plant is somewhat weakly perceived; and
1: Original natural flavor of edible plant is weakly perceived.

The sensory inspectors were chosen from inspectors trained for the following discrimination tests A) to C) and achieved particularly excellent results, had experience in product development and a wealth of knowledge about the quality of foods, such as taste and texture, and were capable of performing absolute evaluation on each sensory inspection item.

A) Taste quality discrimination test of correctly discriminating samples for five tastes (sweetness: taste of sugar, sourness: taste of tartaric acid, savoriness: taste of sodium glutamate, saltiness: taste of sodium chloride, and bitterness: taste of caffeine) from aqueous solutions produced so as to have a concentration close to the threshold of each component and two samples of distilled water, seven samples in total;
B) Concentration difference discrimination test of correctly discriminating concentration differences in five sodium chloride aqueous solutions and five acetic acid aqueous solutions having concentrations slightly different from each other; and
C) Triangle discrimination test of correctly discriminating a soy sauce of maker B from two soy sauces of maker A and the soy sauce of maker B, three samples in total.

In each of the evaluation items, all the inspectors evaluated standard samples in advance, and each score of the evaluation criteria was standardized. The sensory inspection was then performed with objectivity by 10 inspectors. The evaluation of each item was made by selecting a rating closest to the inspector's own evaluation in five-grade scale of each item. The total result of the evaluation was calculated from the arithmetic mean values of the scores by 10 inspectors. The moisture contents of all the powdery foods were less than 15 mass%.

[Table 1]

| | Edible plant | Proportion of edible plant (mass%) | Form of food/drink | Insoluble dietary fiber content (on a dry mass basis) (g/100g) | specific surface area per unit volume after ultrasonication (m²/mL) | 2-Pentylfuran (ppb) | Gamma-nonanolactone (ppb) | Sensory inspection | | | |
|---|---|---|---|---|---|---|---|---|---|---|---|
| | | | | | | | | Astringent taste | Fiber odor | Flavor | Remarks |
| CE 1 | Corn | 100 | Powder | 8.3 | 0.01 | 100 | ND(<0.1) | 1 | 1 | 1 | - |
| CE 2 | | | | | | ND(<0.1) | ND(<0.1) | 1 | 1 | 1 | - |
| TE 1 | Corn | 100 | Powder | 8.8 | 0.71 | 1 | ND(<0.1) | 5 | 4 | 4 | - |
| TE 2 | | | | | | 5 | ND(<0.1) | 5 | 5 | 4 | - |
| TE 3 | | | | | | 10 | ND(<0.1) | 5 | 5 | 4 | - |
| TE 4 | | | | | | 100 | ND(<0.1) | 5 | 5 | 4 | - |
| TE 5 | | | | | | 300 | ND(<0.1) | 5 | 5 | 4 | - |
| TE6 | | | | | | 1000 | ND(<0.1) | 5 | 5 | 4 | - |
| TE 7 | | | | | | 3000 | ND(<0.1) | 5 | 5 | 4 | - |
| TE 8 | | | | | | 5000 | ND(<0.1) | 5 | 5 | 4 | - |
| TE 9 | | | | | | 10000 | ND(<0.1) | 5 | 5 | 4 | - |
| TE 10 | | | | | | 20000 | ND(<0.1) | 5 | 5 | 4 | - |
| TE 11 | | | | | | 30000 | ND(<0.1) | 5 | 5 | 4 | - |
| TE 12 | | | | | | 40000 | ND(<0.1) | 5 | 5 | 4 | - |
| TE 13 | | | | | | 50000 | ND(<0.1) | 5 | 4 | 4 | - |
| TE 14 | | | | | | 1 | 40000 | 5 | 4 | 4 | - |
| TE 15 | | | | | | 5 | 20000 | 5 | 5 | 5 | Sweet flavor of material is perceived |

(continued)

| | Edible plant | Proportion of edible plant (mass%) | Form of food/drink | Insoluble dietary fiber content (on a dry mass basis) (g/100g) | specific surface area per unit volume after ultrasonication (m²/mL) | 2-Pentylfuran (ppb) | Gamma-nonanolactone (ppb) | Sensory inspection | | | Remarks |
|---|---|---|---|---|---|---|---|---|---|---|---|
| | | | | | | | | Astringent taste | Fiber odor | Flavor | |
| TE 16 | Corn | 100 | Powder | 14.6 | 1.62 | 10 | 30000 | 5 | 5 | 5 | Sweet flavor of material is perceived |
| TE 17 | | | | | | 100 | 20000 | 5 | 5 | 5 | Sweet flavor of material is perceived |
| TE 18 | | | | | | 300 | 10000 | 5 | 5 | 5 | Sweet flavor of material is perceived |
| TE 19 | | | | | | 1000 | 5000 | 5 | 5 | 5 | Sweet flavor of material is perceived |
| TE 20 | | | | | | 1000 | 6 | 5 | 5 | 5 | Sweet flavor of material is perceived |
| TE 21 | | | | | | 3000 | 1000 | 5 | 5 | 5 | Sweet flavor of material is perceived |
| TE 22 | | | | | | 5000 | 300 | 5 | 5 | 5 | Sweet flavor of material is perceived |
| TE 23 | | | | | | 10000 | 100 | 5 | 5 | 5 | Sweet flavor of material is perceived |
| TE 24 | | | | | | 20000 | 10 | 5 | 5 | 5 | Sweet flavor of material is perceived |

| | Edible plant | Proportion of edible plant (mass%) | Form of food/drink | Insoluble dietary fiber content (on a dry mass basis) (g/100g) | specific surface area per unit volume after ultrasonication (m²/mL) | 2-Pentylfuran (ppb) | Gamma-nonanolactone (ppb) | Sensory inspection | | | |
|---|---|---|---|---|---|---|---|---|---|---|---|
| | | | | | | | | Astringent taste | Fiber odor | Flavor | Remarks |
| TE 25 | | | | | | 30000 | 5 | 5 | 5 | 5 | Sweet flavor of material is perceived |
| TE 26 | | | | | | 40000 | 3 | 5 | 5 | 5 | - |
| TE 27 | | | | | | 50000 | 1 | 5 | 4 | 4 | - |
| TE 28 | | | | | | 50000 | 0.1 | 5 | 4 | 4 | - |
| TE 29 | Corn | 100 | Powder | 31.5 | 0.21 | 1000 | ND(<0.1) | 5 | 5 | 4 | - |
| TE 30 | | | | | | 1000 | 5 | 5 | 5 | 5 | Sweet flavor of material is perceived |
| CE 3 | | | | 10.8 | 0.01 | 100 | 100 | 2 | 3 | 2 | - |
| TE 31 | Beet | 100 | Powder | 10.8 | 0.14 | 1000 | ND(<0.1) | 5 | 5 | 4 | - |
| TE 32 | | | | | | 1000 | 5 | 5 | 5 | 5 | Sweet flavor of material is perceived |
| TE 33 | Carrot | 100 | Powder | 11.5 | 0.07 | 600 | ND(<0.1) | 5 | 5 | 4 | - |
| TE 34 | | | | | | 600 | 50 | 5 | 5 | 5 | Sweet flavor of material is perceived |

EP 3 915 395 B1

(continued)

| | Edible plant | Proportion of edible plant (mass%) | Form of food/drink | Insoluble dietary fiber content (on a dry mass basis) (g/100g) | specific surface area per unit volume after ultrasonication (m²/mL) | 2-Pentylfuran (ppb) | Gamma-nonanolactone (ppb) | Sensory inspection | | | |
|---|---|---|---|---|---|---|---|---|---|---|---|
| | | | | | | | | Astringent taste | Fiber odor | Flavor | Remarks |
| TE 35 | Pumpkin | 100 | Powder | 8.2 | 0.11 | 400 | ND(<0.1) | 5 | 5 | 4 | - |
| TE 36 | | | | | | 400 | 200 | 5 | 5 | 5 | Sweet flavor of material is perceived |
| TE 37 | Pea | 100 | Powder | 16.2 | 0.24 | 200 | ND(<0.1) | 5 | 5 | 4 | - |
| TE 38 | | | | | | 200 | 400 | 5 | 5 | 5 | Sweet flavor of material is perceived |
| TE 39 | Paprika | 100 | Powder | 21.6 | 1.07 | 50 | ND(<0.1) | 5 | 5 | 4 | - |
| TE 40 | | | | | | 50 | 600 | 5 | 5 | 5 | Sweet flavor of material is perceived |
| TE 41 | Green soybean | 100 | Powder | 37.5 | 0.04 | 5 | ND(<0.1) | 4 | 5 | 4 | - |
| TE 42 | | | | | | 5 | 1000 | 4 | 5 | 5 | Sweet flavor of material is perceived |
| CE 4 | | | | | | ND(<0.1) | ND(<0.1) | 5 | 2 | 2 | - |
| TE 43 | Corn | 50 | Paste | 4.4 | 0.39 | 2 | ND(<0.1) | 5 | 5 | 4 | - |
| TE 44 | | | | | | 2 | 3000 | 5 | 5 | 5 | Sweet flavor of material is perceived |
| CE 5 | | | | | | ND(<0.1) | ND(<0.1) | 5 | 2 | 2 | - |

(continued)

| | Edible plant | Proportion of edible plant (mass%) | Form of food/drink | Insoluble dietary fiber content (on a dry mass basis) (g/100g) | specific surface area per unit volume after ultrasonication (m²/mL) | 2-Pentylfuran (ppb) | Gamma-nonanolactone (ppb) | Sensory inspection | | | |
|---|---|---|---|---|---|---|---|---|---|---|---|
| | | | | | | | | Astringent taste | Fiber odor | Flavor | Remarks |
| TE 45 | Corn | 10 | Beverage | 8.8 | 2.51 | 1 | ND(<0.1) | 5 | 4 | 4 | - |
| TE 46 | | | | | | 1 | 3000 | 5 | 4 | 5 | Sweet flavor of material is perceived |
| TE 47 | | | | | | 100 | 100 | 5 | 5 | 5 | Sweet flavor of material is perceived |
| TE 48 | | | | | | 1000 | 1000 | 5 | 5 | 5 | Sweet flavor of material is perceived |
| CE 6 | Corn | 40 | Bar-shaped | 4.4 | 0.50 | ND(<0.1) | ND(<0.1) | 5 | 2 | 2 | - |
| TE 49 | | | | | | 2 | ND(<0.1) | 5 | 5 | 4 | - |
| TE 50 | | | | | | 2 | 3000 | 5 | 5 | 5 | Sweet flavor of material is perceived |
| * CE represents Comparative Example, and TE represents Test Example. | | | | | | | | | | | |

EP 3 915 395 B1

Test Examples 51 to 59

The powdery food obtained in Test Example 20 and dextrin (Pinedex #100 (manufactured by Matsutani Chemical Industry Co., Ltd.)) were mixed so as to attain the proportion of the edible plant shown in Table 2, to manufacture a powdery food. Then, the astringent taste and fiber odor derived from insoluble dietary fibers of the powdery food and the flavor derived from the edible plant were subjected to sensory inspection in the same manner as above. The results are shown in Table 2. When effects other than the evaluation criteria were found, a typical effect among them is shown in Remarks of Table 2.

[Table 2]

| | Powdery food | Proportion of edible plant (mass%) | Form of food/ drink | Sensory inspection | | | |
|---|---|---|---|---|---|---|---|
| | | | | Astringent taste | Fiber odor | Flavor | Remarks |
| TE 51 | TE 20 + dextrin | 90.0 | Powder | 5 | 5 | 5 | Sweet flavor of material is perceived |
| TE 52 | | 80.0 | Powder | 5 | 5 | 5 | Sweet flavor of material is perceived |
| TE 53 | | 70.0 | Powder | 5 | 5 | 5 | Sweet flavor of material is perceived |
| TE 54 | | 60.0 | Powder | 5 | 5 | 5 | Sweet flavor of material is perceived |
| TE 55 | | 50.0 | Powder | 5 | 5 | 5 | - |
| TE 56 | | 40.0 | Powder | 5 | 5 | 5 | - |
| TE 57 | | 30.0 | Powder | 5 | 5 | 4 | - |
| TE 58 | | 20.0 | Powder | 5 | 5 | 4 | - |
| TE 59 | | 100 | Powder | 5 | 5 | 4 | - |
| * TE represents Test Example. | | | | | | | |

It is evident from Table 1 that the astringent taste and fiber odor derived from insoluble dietary fibers are suppressed simultaneously by controlling the 2-pentylfuran content, a specific surface area per unit volume after ultrasonication, etc. within their respective predetermined ranges in various powdery foods containing insoluble dietary fibers at more than a predetermined proportion, and foods/drinks containing it. It is further evident that the effects of the present invention are more strongly provided and the effect of enhancing the sweet flavor derived from an edible plant is conferred by controlling the gamma-nonanolactone content within a predetermined range.

It is evident from Table 2 that the content of a powder derived from an edible plant with respect to the whole of the powdery food preferably falls within a predetermined range.

Industrial Applicability

The powdery food containing an edible plant of the present invention can be used conveniently and widely in the food field and has exceedingly high usefulness.

**Claims**

1. A powdery food comprising an edible plant and satisfying following characteristics (1) to (4):

(1) the powdery food has an insoluble dietary fiber content of 1.0 mass% or more on a dry mass basis;
(2) the powdery food has a specific surface area per unit volume after ultrasonication of the powdery food at a frequency of 40 kHz at an output of 40 W for 3 minutes of 0.02 m$^2$/mL or more;
(3) the powdery food has a 2-pentylfuran content of 1 ppb or more and 50,000 ppb or less; and
(4) the powdery food has an edible plant content of 10 mass% or more with respect to the whole of the powdery food,

**characterised in that** the powdery food further satisfies the following characteristic (5):
(5) the powdery food has a gamma-nonanolactone content of 0.1 ppb or more and 40,000 ppb or less.

2. The powdery food according to claim 1, wherein the powdery food has a content of insoluble dietary fibers derived from the edible plant of 50 mass% or more with respect to the insoluble dietary fiber content of the whole of the powdery food.

3. The powdery food according to claim 1 or 2, wherein the edible plant is one or more selected from the group consisting of grains, potatoes, pulses, nuts, vegetables, fruits, and mushrooms.

4. The powdery food according to any one of claims 1 to 3, wherein the edible plant is one or more selected from the group consisting of paprika, beet, soybean, corn, carrot, pumpkin, pea, broad bean, sweet potato, broccoli, spinach, tomato, and kale.

5. Use of the powdery food according to any one of claims 1 to 4 in a food/drink.

6. A method for manufacturing the powdery food according to any one of claims 1 to 4, the method comprising crushing an edible plant having a moisture content of 20 mass% or less, and adding 2-pentylfuran and gamma-nonanolactone.

7. A method either (i) for manufacturing, or (ii) for suppressing astringent taste of, a food/drink containing fine particles derived from an edible plant, the method comprising crushing an edible plant having an insoluble dietary fiber content of 1.0 mass% or more on a dry mass basis and adding 1 ppb or more and 50,000 ppb or less of 2-pentylfuran,

wherein a specific surface area per unit volume of the fine particles after ultrasonication of the powdery food at a frequency of 40 kHz at an output of 40 W for 3 minutes is 0.02 m$^2$/mL or more,
**characterised in that** the method further comprises adding 1 ppb or more and 40,000 ppb or less of gamma-nonanolactone.

8. The method according to claim 7, wherein the food/drink is of a liquid, semi-solid or solid form.

**Patentansprüche**

1. Pulverförmiges Nahrungsmittel, das eine essbare Pflanze umfasst und folgende Eigenschaften (1) bis (4) aufweist:

(1) das pulverförmige Nahrungsmittel weist einen Gehalt unlöslicher Ballaststoffe von 1,0 Masse-% oder mehr bezogen auf das Trockengewicht auf;
(2) das pulverförmige Nahrungsmittel weist nach dreiminütiger Ultraschallbehandlung des pulverförmigen Nahrungsmittels bei einer Frequenz von 40 kHz bei einer Leistung von 40 W eine spezifische Oberfläche pro Einheitsvolumen von 0,02 m$^2$/ml oder mehr auf;
(3) das pulverförmige Nahrungsmittel weist einen 2-Pentylfurangehalt von 1 ppb oder mehr und 50.000 ppb oder weniger auf; und
(4) das pulverförmige Nahrungsmittel weist einen Gehalt einer essbaren Pflanze von 10 Masse-% oder mehr bezogen auf die Gesamtheit des pulverförmigen Nahrungsmittels auf;

**dadurch gekennzeichnet, dass** das pulverförmige Nahrungsmittel ferner folgende Eigenschaft (5) aufweist:
(5) das pulverförmige Nahrungsmittel weist einen gamma-Nonanolactongehalt von 0,1 ppb oder mehr und 40.000 ppb oder weniger auf.

2. Pulverförmiges Nahrungsmittel nach Anspruch 1, wobei das pulverförmige Nahrungsmittel einen Gehalt unlöslicher Ballaststoffe, die aus der essbaren Pflanze stammen, von 50 Masse-% oder mehr bezogen auf den Gehalt unlöslicher Ballaststoffe der Gesamtheit des pulverförmigen Nahrungsmittels aufweisen.

3. Pulverförmiges Nahrungsmittel nach Anspruch 1 oder 2, wobei die essbare Pflanze eine oder mehrere aus der Gruppe bestehend aus Getreide, Kartoffeln, Hülsenfrüchten, Nüssen, Gemüse, Früchten und Pilzen ist.

4. Pulverförmiges Nahrungsmittel nach einem der Ansprüche 1 bis 3, wobei die essbare Pflanze eine oder mehrere aus der Gruppe bestehend aus Paprika, Rübe, Sojabohne, Mais, Karotte, Kürbis, Erbse, Ackerbohne, Süßkartoffeln, Brokkoli, Spinat, Tomate und Kohl ist.

5. Verwendung eines pulverförmigen Nahrungsmittels nach einem der Ansprüche 1 bis 4 in einem Nahrungsmittel/Getränk.

6. Verfahren zur Herstellung eines pulverförmigen Nahrungsmittels nach einem der Ansprüche 1 bis 4, wobei das Verfahren das Zerkleinern einer essbaren Pflanze mit einem Feuchtigkeitsgehalt von 20 Masse-% oder weniger und das Zusetzen von 2-Pentylfuran und gamma-Nonanolacton umfasst.

7. Verfahren entweder (i) zur Erzeugung oder (ii) zur Unterdrückung des adstringierenden Geschmacks eines Nahrungsmittels/Getränks, das aus einer essbaren Pflanze stammende Feinteilchen enthält, wobei das Verfahren das Zerkleinern einer essbaren Pflanze mit einem Gehalt unlöslicher Ballaststoffe von 1,0 Masse-% oder mehr bezogen auf das Trockengewicht und das Zusetzen von 1 ppb oder mehr und 50.000 ppb oder weniger von 2-Pentylfuran umfasst,

wobei die spezifische Oberfläche pro Einheitsvolumen der Feinteilchen nach dreiminütiger Ultraschallbehandlung des pulverförmigen Nahrungsmittels bei einer Frequenz von 40 kHz bei einer Leistung von 40 W 0,02 $m^2$/ml oder mehr beträgt,
**dadurch gekennzeichnet, dass** das Verfahren ferner das Zusetzen von 1 ppb oder mehr und 40.000 ppb oder weniger gamma-Nonanolacton umfasst.

8. Verfahren nach Anspruch 7, wobei das Nahrungsmittel/Getränk eine flüssige, halbfeste oder feste Form aufweist.

**Revendications**

1. Aliment en poudre comprenant une plante comestible et satisfaisant aux caractéristiques (1) à (4) suivantes :

(1) l'aliment en poudre présente une teneur en fibres alimentaires insolubles de 1,0 % en masse ou plus sur une base de masse sèche ;
(2) l'aliment en poudre présente une surface spécifique par volume unitaire après un traitement par ultrasons de l'aliment en poudre à une fréquence de 40 kHz à un débit de 40 W pendant 3 minutes de 0,02 $m^2$/mL ou plus ;
(3) l'aliment en poudre présente une teneur en 2-pentylfurane de 1 ppb ou plus et de 50 000 ppb ou moins ; et
(4) l'aliment en poudre présente une teneur en plante comestible de 10 % en masse ou plus par rapport à la totalité de l'aliment en poudre,

**caractérisé en ce que** l'aliment en poudre satisfait en outre à la caractéristique suivante (5) :
(5) l'aliment en poudre présente une teneur en gamma-nonanolactone de 0,1 ppb ou plus et de 40 000 ppb ou moins.

2. Aliment en poudre selon la revendication 1, dans lequel l'aliment en poudre présente une teneur en fibres alimentaires insolubles dérivées de la plante comestible de 50 % en masse ou plus par rapport à la teneur en fibres alimentaires insolubles de la totalité de l'aliment en poudre.

3. Aliment en poudre selon la revendication 1 ou 2, dans lequel la plante comestible est une ou plusieurs choisies dans le groupe comprenant des céréales, des pommes de terre, des légumineuses, des noix, des légumes, des fruits et des champignons.

4. Aliment en poudre selon l'une quelconque des revendications 1 à 3, dans lequel la plante comestible est une ou plusieurs choisies dans le groupe comprenant le paprika, la betterave, le soja, le maïs, la carotte, la citrouille, le pois, la fève, la patate douce, le brocoli, les épinards, la tomate et le chou frisé.

**5.** Utilisation de l'aliment en poudre selon l'une quelconque des revendications 1 à 4 dans un aliment/une boisson.

**6.** Procédé de fabrication de l'aliment en poudre selon l'une quelconque des revendications 1 à 4, le procédé comprenant le broyage d'une plante comestible présentant une teneur en humidité de 20 % en masse ou moins, et l'ajout de 2-pentylfurane et de gamma-nonanolactone.

**7.** Procédé soit (i) pour fabriquer, soit (ii) pour supprimer le goût astringent d'un aliment/d'une boisson contenant des particules fines dérivées d'une plante comestible, le procédé comprenant le broyage d'une plante comestible présentant une teneur en fibres alimentaires insolubles de 1,0 % en masse ou plus sur une base de masse sèche et l'ajout de 1 ppb ou plus et de 50 000 ppb ou moins de 2-pentylfurane,

dans lequel une surface spécifique par volume unitaire des particules fines après traitement par ultrasons de l'aliment en poudre à une fréquence de 40 kHz à un débit de 40 W pendant 3 minutes est de 0,02 m$^2$/mL ou plus, **caractérisé en ce que** le procédé comprend en outre l'ajout de 1 ppb ou plus et de 40 000 ppb ou moins de gamma-nonanolactone.

**8.** Procédé selon la revendication 7, dans lequel l'aliment/la boisson est sous une forme liquide, semi-solide ou solide.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150104398 A1
- CN 107259324 A
- JP 2018191634 A
- JP 2008099677 A
- JP 2005021137 A

**Non-patent literature cited in the description**

- *the Standard Tables of Food Composition in Japan,* 2015
- *CHEMICAL ABSTRACTS,* 3777-69-3
- *CHEMICAL ABSTRACTS,* 104-61-0